## Europäisches Patentamt
## European Patent Office
## Office européen des brevets

(11) Veröffentlichungsnummer: **0 357 007**
**A2**

# EUROPÄISCHE PATENTANMELDUNG

(21) Anmeldenummer: 89115949.3

(51) Int. Cl.5: **A01B 59/043 , B60D 1/42**

(22) Anmeldetag: 30.08.89

(30) Priorität: 30.08.88 DE 8810953 U

(43) Veröffentlichungstag der Anmeldung:
07.03.90 Patentblatt 90/10

(84) Benannte Vertragsstaaten:
**AT DE ES FR GB IT**

(71) Anmelder: **Klöckner-Humboldt-Deutz Aktiengesellschaft**
**Deutz-Mülheimer-Strasse 111 Postfach 80 05 09**
**D-5000 Köln 80(DE)**

(72) Erfinder: **Nemitz, Konrad**
**Sternstrasse 23**
**D-5347 Swisttal-Essig(DE)**

(54) **Seitenstabilisator für die Unterlenker einer Dreipunktschlepperhydraulik.**

(57) Bekannte Seitenstabillisatoren werden gebildet durch ineinander verschiebbare Profilelemente mit einer Vielzahl von Bohrungen, durch die bei Übereinstimmung ein Sperrbolzen die Seitenbeweglichkeit des Unterlenkers begrenzt.

Zur Verbesserung der Einstellung der Seitenstabilisatoren ist eine Stabstange 5, 6 vorgesehen, bestehend aus einem Innenraum 8, 11 und einem Außenrohr 9, 12, die voneinander abweichende Lochbilder 14, 17 mit einer verschiedenartigen Nonius-Teilung aufweisen.

Der vorgestellte Seitenstabilisator ermöglicht eine exakt einstellbare, spielfreie Position des Unterlenkers 30, 31 und damit Einhaltung der genormten Zwischenabtände der Aufnahmepunkte an den Anbaugeräten.

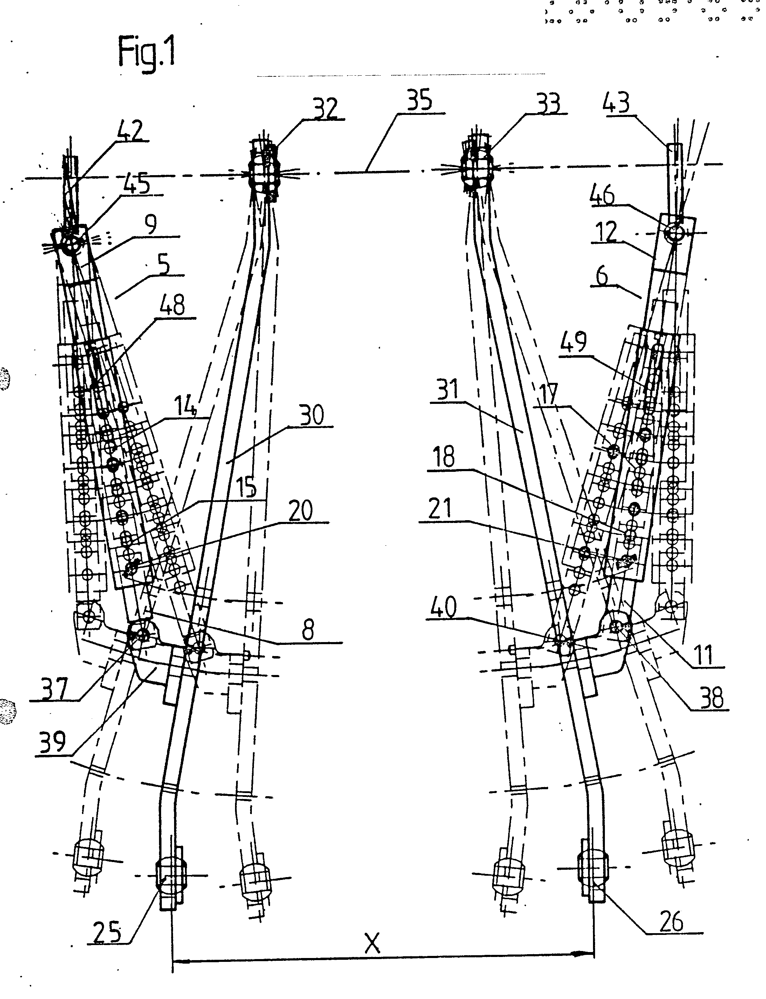

Der Fig. 1 ist ein prinzipieller Aufbau des erfindungsgemäßen Seitenstabilisators zu entnehmen.

EP 0 357 007 A2

## Seitenstabilisator für die Unterlenker einer Dreipunktschlepperhydraulik

Die Erfindung betrifft einen Seitenstabilisator nach dem Oberbegriff des Anspruchs 1.

Die Dreipunkthydraulik an Schleppern, mit der die am Schlepper angekuppelten Arbeitsgeräte in eine Arbeits- und Transportstellung sowie in eine beliebige Lageposition gebracht werden können, verlangt insbesondere für die Unterlenker beispielsweise für die Transportstellung der Arbeitsgeräte eine Seitenstabilisierung. Damit soll der seitliche Bewegungsfreiraum der Unterlenker bewußt eingeschränkt werden, um beispielsweise bei einem schweren Arbeitsgerät während der Straßenfahrt Seitenbewegungen auszuschließen, was für die Spurführung des Schleppers erforderlich ist.

Als bekannter Stand der Technik kommen Seitenstabilisatoren ausgeführt als Stabstangen zum Einsatz, deren Aufbau ineinander verschiebbare Profilelemente aufweist, wobei jedes Element mit einer Vielzahl von Bohrungen versehen ist und die Stabstange in einer Vielzahl von übereinstimmenden Lochbildern durch die Verwendung eines Sperrbolzens längenblockierbar ist und durch das Zusammenwirken mit dem Unterlenker dieser eine Begrenzung der Seitenbeweglichkeit erfährt. Um den seitlichen Bewegungsraum weiter einzugrenzen, sind Stabstangen bekannt, die beidseitig in einem Profilelement ein Lochbild mit einer Nonius-Teilung besitzen zur weiteren Eingränzung der Seitenbeweglichkeit der Unterlenker bei angebautem Arbeitsgerät.

Der Erfindung liegt die Aufgabe zugrunde, einen Seitenstabilisator als Stabstabe so auszubilden, daß dieser im Zusammenwirken mit dem Unterlenker spielfrei in den Aufnahmepunkten des Arbeitsgerätes anliegt unter Einhaltung der genormten Zwischenabstände der Aufnahmepunkte an den Anbaugeräten.

Erfindungsgemäß wird die Aufgabe durch die kennzeichnenden Merkmale des Anspruchs 1 gelöst.

Die Stabstangen auszubilden, als ineinander verschiebbare Rohrelemente bestehend aus dem Innen- und Außenrohr, bieten den Vorteil einer leichten Bauweise. Durch das Einbringen eines Lochbildes in das Inennrohr, wobei die einzelnen Bohrungen im Innenrohr der linken und rechten Stabstange zueinander verschieden eingebracht sind, ermöglicht vorteilhaft eine spielfreie Anlenkung. Die mit Hilfe von verschiedenen Nonien-Einteilungen (Hilfsmaßstab für eine Längenmessung, wobei das Noniusmaß beispielsweise in 10 Einheiten aufgeteilt wird, die zusammen so lang sind wie 9 Einheiten des Hauptmaßstabes) eingebrachten Lochbilder ermöglichen vorteilhaft ein gewünschtes, spielfreies Einstellen der Unterlenker an das angekoppelte Arbeitsgerät. Die erfindungsgemäße Stabstangen-Ausbildung sieht weiter vor, daß für eine Stabstange durch eine relativ große Nonius-Teilung eine zyklische Verstellmöglichkeit der Stabstange möglich wird, durch die das Längenmaß der Stabstange in 3 mm-Schritten veränderlich ist. Die zyklische Verstellmöglichkeit gestattet, die Unterlenkerenden auch über den Bereich der genormten Abstandsmaße der Kategorie I, II für die Aufnahmepunkte von Anbaugeräten den Unterlenker horizontal angepaßt an das jeweilige Abstandsmaß des Anbaugerätes anzupassen.

In vorteilhafter Ausgestaltung der Erfindung ist vorgesehen, daß die übereinstimmenden Bohrungen von Innen- und Außenrohr bei einer Verlängerung der Stabstange zyklisch vom Anlenkpunkt zum Drehpunkt der Stabstange genutzt werden, was zur Vereinfachung der Benutzung führt.

Die Anwendung einer engeren Nonius-Teilung für das Lochbild des Innenrohres der gegenüberliegenden Stabstange wird eine Feinabstimmung für die Aufnahmepunkte der Anbaugeräte erreicht und damit eine spielfreie Anlenkung, die so weit geht, daß die Unterlenker mit einer gewissen Vorspannung an bzw. in den Aufnahmepunkten der Anbaugeräte anliegen. Durch den weit engeren Verstellschritt wird vorteilhaft eine aufgabengerechte, starre Anbindung der Anbaugeräte ohne Restspiel mit Hilfe der Dreipunkthydraulik realisiert, wie es für den Transport von Anbaugeräten und bei einigen Geräten in Arbeitsstellung (Drillmaschine, Düngersträuer) erforderlich ist.

Der Erfindungsgedanke erlaubt, daß lediglich die Innenrohre ein voneinander abweichendes Lochbild aufweisen, dagegen zeigen die Außenrohre einen übereinstimmenden Lochabstand.

Versuche haben ergeben, daß ein Lochabstand von 24 mm im Lochbild für beide Außenrohre sich als vorteilhaft erweist. Die Innenrohre, welche ein voneinander abweichendes Lochbild aufweisen, besitzen Lochabstände von 25 bzw. 27 mm. Damit ergeben sich für eine Stabstange Verstellschritte im Bereich von 1 mm und für die gegenüber angeordnete Stabstange Verstellschritte im Abstand von 3 mm.

Die erfindungsgemäße Stabstange zeichnet sich weiter durch die Möglichkeit aus, den mit ihr zusammenwirkenden Unterlenker im Bedarfsfall einen größeren horizontalen Spielraum zu gewähren, in dem das Innen- bzw. Außenrohr mit einem Langloch versehen ist und damit mit Hilfe des Sperrbolzens die horizontale Beweglichkeit vergrößert werden kann.

Weitere Merkmale der Erfindung ergeben sich aus der Figurenbeschreibung, die ausführlich das in den Zeichnungen dargestellte Ausführungsbeispiel erläutert.

Es zeigt:

Fig. 1: die Seitenstabilisatoren an zwei Unterlenkern,

Fig. 2: vergrößert dargestellt die erfindungsgemäße Stabstange.

Der Fig. 1 ist sinnbildlich die Anordnung der Unterlenker 30, 31 an einem Schlepper zu entnehmen, von dem lediglich sinnbildlich die Drehachse 35 als Mittellinie dargestellt ist. Die jeweils gegenläufig gekröpft ausgebildeten Unterlenker 30, 31 sind über die Kugelgelenke 32, 33 am Schlep per verbunden. Am gegenüberliegenden Ende des Schlepperbefestigungspunktes besitzen die Unterlenker 30, 31 die Aufnahme 25, 26, über die der Schlepper mit dem Anbaugerät gekoppelt werden kann. Seitlich, nach außen zeigend von den Kugelgelenken 32, 33 versetzt, befinden sich die Verbindungsstücke 42, 43, die am Schlepper befestigt sind und über den Drehpunkt 45, 46 mit dem Außenrohr 9, 12 der Stabstange 5, 6 verbunden ist. Im Anlenkpunkt 37, 38 ist das Innenrohr 8, 11 der Stabstange 5, 6 über den Flansch 39, 40 mit dem Unterlenker 30, 31 drehbar verbunden. Die jeweils beidseitig des Unterlenkers 30, 31 bzw. Stabstange 5, 6 strichpunktiert gezeichneten weiteren Stellungen dieser Bauteile zeigt den möglichen Grenzstellbereich an, in dem die Aufnahme 25, 26 (Endpunkte der Unterlenker 30, 31) abweichend von der in Fig. 1 dargestellten und mit dem Abstandsmaß X gekennzeichneten Maß verstellt und positioniert werden können. Die Verstellung erfolgt, in dem Bohrungen der Lochbilder 14, 15 des Innen- bzw. Außenrohres der Stabstange 5 bzw. Bohrungen der Lochbilder 17, 18 der Stabstange 6 in Übereinstimmung gebracht und durch den Sperrbolzen 20, 21 blockiert werden. Durch das einem Ende einseitig eingebrachte Langloch 48, 49 im Außenrohr 9, 12 kann eine begrenzte Seitenbeweglichkeit der Unterlenker realisiert werden.

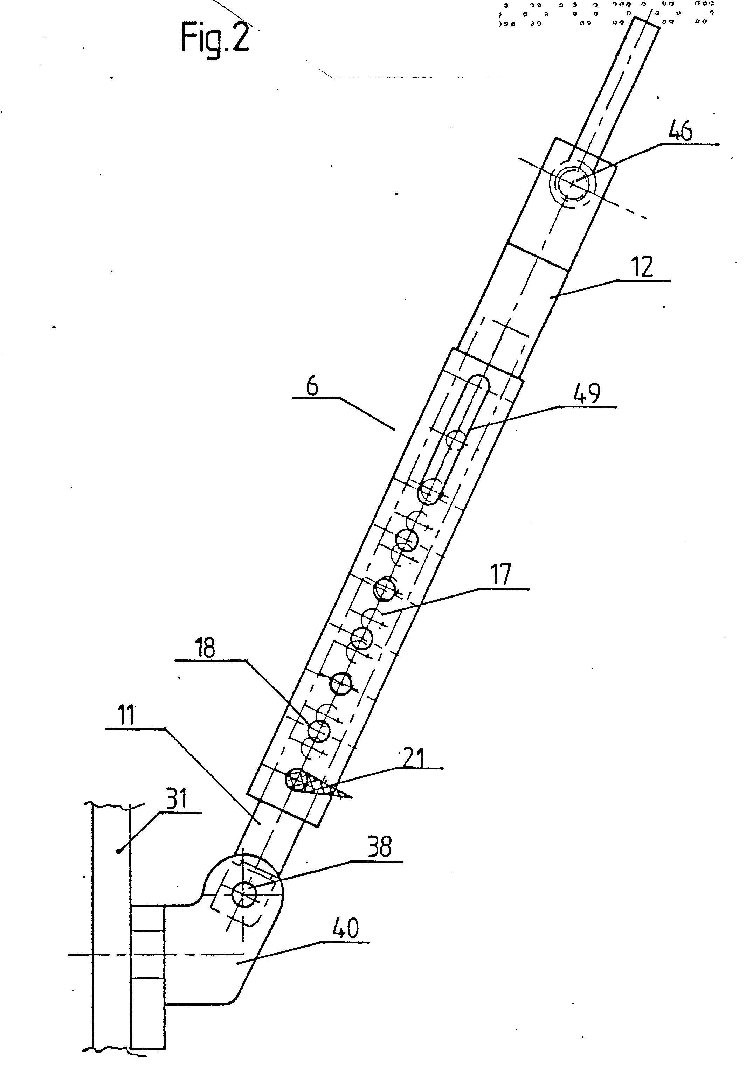

Der Fig. 2 ist in einer vergrößerten Darstellung die erfindungsgemäße Stabstange 6 entnehmbar, aus der der zyklische Verstellschritt deutlich wird. Eine Längenänderung der Stabstange 6 ausgehend von der durch den Sperrbolzen 21 gezeigten Blockierung bewirkt bei Herausnahme des Sperrbolzens 21, daß durch ein Herausziehen des Innenrohres 11 uns sich der damit verbundenen Verschiebung von Außenrohr 12 zum Innenrohr 11, sich ständig eine zyklische Übereinstimmung von Bohrungen der einzelnen Lochbilder in Richtung Anlenpunkt 38 bzw. Drehpunkt 46 einstellt.

## Ansprüche

1. Seitenstabilisator für die Unterlenker einer Dreipunkthydraulik eines Schleppers, ausgebildet als Stabstangen, die jeweils aus zwei verschiebbaren mit einem Lochbild, zum Teil in einer Nonius-Teilung versehenen Profilelementen gebildet werden und durch einen Sperrbolzen eine starre, horizontale Fixierung der Unterlenker ermöglichen, dadurch gekennzeichnet, daß die Stabstangen (5, 6) jeweils aus einem Innenrohr (8, 11) und einem Außenrohr (9, 12) bestehen und das Lochbild (14) des Innenrohres (8) der einen Schlepperseite zum Lochbild (17) des Innenrohres (11) der anderen eine verschiedene Nonius-Teilung aufweist.

2. Seitenstabilisator nach Anspruch 1, dadurch gekennzeichnet, daß die Außenrohre (9, 12) ein Lochbild (15, 18) aufweisen mit einer zueinander übereinstimmenden Nonius-Teilung.

3. Seitenstabilisator nach einem der Ansprüche 1 bis 2, dadurch gekennzeichnet, daß das Lochbild (15, 18) beider Außenrohre (9, 12) einen Lochabstand von 24 mm aufweist.

4. Seitenstabilisator nach einem der Ansprüche 1 bis 3, dadurch gekennzeichnet, daß das Lochbild des einen Innenrohres (8) einen Lochabstand von 25 mm und das Lochbild (17) des anderen Innenrohres (11) einen Lochabstand von 27 mm besitzt.

5. Seitenstabilisator nach einem der Ansprüche 1 bis 4, dadurch gekennzeichnet, daß in den Außenrohren (9, 12) der Stabstangen (5, 6) ein Langloch (48, 49) eingebracht ist

Fig.1

KHD AG D88139

EP 0 357 007 A2

Fig.2

KHD AG D88139